# EUROPÄISCHE PATENTSCHRIFT

(11) **EP 1 431 545 B1**
(45) Veröffentlichungstag und Bekanntmachung des Hinweises auf die Patenterteilung: **26.11.2008**
(21) Anmeldenummer: 03019234.8
(22) Anmeldetag: 26.08.2003
(51) Int. Cl.: F02D 9/10

(54) **Schaltklappenvorrichtung**
Control valve assembly
Ensemble volets de commande

(30) Priorität: 17.12.2002 DE 10258895
(43) Veröffentlichungstag der Anmeldung: 23.06.2004
(73) Patentinhaber: Pierburg GmbH, 41460 Neuss (DE)
(72) Erfinder: Hüsges, Hans-Jürgen, 47877 Willich (DE)
(74) Vertreter: Patentanwälte ter Smitten

(56) Entgegenhaltungen:
- EP-A2- 1 028 238
- DE-B1- 1 775 012
- GB-A- 232 243

## Beschreibung

Die Erfindung betrifft ein Luftansaugkanalsystem einer Verbrennungskraftmaschine mit einer Schaltklappenvorrichtung, welche mindestens einen Schaltklappengrundkörper aufweist, welcher drehfest auf einer Welle angeordnet ist, die in einem Gehäuse des Luftansaugkanalsystems drehbar gelagert ist und über eine Verstellvorrichtung in Drehung versetzbar ist.

Schaltklappenvorrichtungen werden in Luftansaugkanalsystemen für längenverstellbare Saugrohre verwendet. Zumeist werden einseitig gelagerte Schaltklappen eingesetzt. Diese benötigen jedoch im Vergleich zu mittig gelagerten Schaltklappen hohe Stellkräfte.

In der DE 195 04 256 A1 wurde aus diesem Grund eine mittig gelagerte Schaltklappenvorrichtung angemeldet, bei der auf einer in einem Saugrohr drehbar gelagerten, antreibbaren Welle Schaltklappen drehfest angeordnet sind. Dabei werden die Schaltklappen aus Kunststoff und die Welle aus Metall hergestellt, wobei die Schaltklappen auf die Welle aufgeklipst werden und somit auf der Welle axial verschiebbar angeordnet sind, was zwar einen Toleranzausgleich im Zusammenspiel Welle-Schaltklappe ermöglicht, jedoch die Dichtigkeit einer solchen Schaltklappenvorrichtung im Vergleich zu einseitig gelagerten Schaltklappen deutlich herabsetzt und hohe Toleranzanforderungen an die Fertigung des Schaltklappenkörpers zur Saugrohröffnung stellt. Daher wird bei vielen Schaltklappenvorrichtungen ein Anschlag im Luftansaugkanalsystem im Bereich der Schaltklappe vorgesehen, wodurch zwar die Dichtigkeit erhöht wird, aber bei geöffneter Schaltklappe der Luftstrom gestört wird.

Eine andere Schaltklappenvorrichtung mit mittig gelagerten Schaltklappen ist aus der EP 1 028 238 A2 bekannt. Der Schaltklappengrundkörper ist hier umspritzt, wobei die daraus entstehenden Elemente als Dichtlippen gegen einen Absatz am Gehäuse anliegen. Auch diese Klappen stören durch ihre Baubreite die Strömung durch den Kanal im geöffneten Zustand. Auch die Anschläge am Gehäuse bilden durch ihre Form einen hohen Strömungswiderstand und führen zu unerwünschten Verwirbelungen.

Eine Lösung dieses Problems wird in der DE 43 29 527 durch eine Drosseleinrichtung für ein Luftansaugkanalsystem nahegelegt, wobei der Anschlag im Ansaugkanal wulstartig ausgeführt ist und als Dichtfläche zum Drosselklappenkörper dient. Durch diese Ausführung wird die Störung der Strömung im Vergleich zu scharfkantigen Anschlägen deutlich verringert.

Eine ähnliche Drosselkappe ist auch aus der DE-AS 1 775 012 bekannt, wobei ein Dichtring zwischen zwei Klappenkörpern eingespannt ist, wobei der Dichtring gegen den wulstartigen Anschlag anliegt.

Nachteilig an den genannten Ausführungen ist, daß bei mittig gelagerten Schaltklappen die Strömung durch Anschläge an der Kanalinnenwand oder den Klappenkörper selbst gestört wird, da dieser aus Festigkeitsgründen entweder relativ dick ausgeführt werden muß wie bei der Drosseleinrichtung oder im Strömungsbereich Rippen enthält. Des weiteren weisen diese Schaltklappen im geschlossenen Zustand Dichtigkeitsprobleme auf, da entweder ein schmaler Spalt zwischen Schaltklappenkörper und Saugrohrinnenwand besteht oder bei der Ausführung mit einer wulstartigen Erhöhung an der Rohrinnenwand wie bei der beschriebenen Drosseleinrichtung ein vollständiges Verschließen bei auftretenden Verunreinigungen im Bereich des Wulstes nicht mehr gewährleistet ist. Auch ein Verklemmen der Schaltklappe an der wulstartigen Erhöhung kann beim bestehenden System auftreten.

Aufgabe der Erfindung ist es daher, eine Schaltklappenvorrichtung zu schaffen, die einerseits ein dichtes Verschließen eines Kanals sicherstellt, wobei ein mögliches Verklemmen verhindert werden soll und andererseits eine mittig gelagerte Schaltklappenvorrichtung zu schaffen, die die freie Strömung bei geöffneter Schaltklappe möglichst wenig behindert. Durch das dichte Verschließen bei geschlossener Klappe und die Strömung mit möglichst geringem Widerstand bei geöffneter Klappe soll jeweils eine optimale Zylinderfüllung in beiden Schaltzuständen des Saugrohres sichergestellt werden. Des weiteren ist eine kostengünstige Herstellung erwünscht.

Diese Aufgaben werden dadurch gelöst, daß am äußeren Randbereich des Schaltklappengrundkörpers Flügelelemente, die im geschlossenen Zustand der Schaltklappe an einer wulstartigen Erhöhung einer inneren Wand des Luftansaugkanalsystems anliegen, derart an dem Schaltklappengrundkörper angeordnet sind, daß sie beim Übergang vom geöffneten zum geschlossenen Zustand entgegengesetzt zur Drehrichtung weisen. Dadurch wird ein dichtes Verschließen des entsprechenden Kanals sichergestellt und andererseits wird der Schaltklappengrundkörper durch die außen liegenden Flügelelemente so stabilisiert, daß er dünn ausgeführt werden kann und somit die Strömung bei geöffneter Schaltklappe nur gering beeinflußt.

Die Flügelelemente sind vorzugsweise im wesentlichen teilkreisbogenförmig ausgeführt sind und zwar derart, daß die Flügelelemente mit wachsendem Abstand vom Schaltklappengrundkörper zur inneren Wand des Luftansaugkanalsystems weisen. Dadurch wird erreicht, daß sie sich bei geschlossener Schaltklappe an beiden Seiten der Schaltklappe um die wulstartige Erhöhung an der inneren Wand des Kanals legen, wodurch die Dichtigkeit zusätzlich sichergestellt wird.

In einer bevorzugten Ausführungsform ist ein Radius der im wesentlichen teilkreisbogenförmigen Flügelelemente kleiner als ein Radius der korrespondierenden wulstartigen Erhöhung der inneren Wand des Luftansaugkanalsystems. Hierdurch können sowohl bestehende Fertigungstoleranzen der Schaltklappe ausgeglichen werden, so daß diese aufgrund der geringeren Anforderungen preiswerter hergestellt werden kann, als auch ein mögliches Verklemmen der Schaltklappe durch den entstehenden Freiraum zwischen Flügel und wulstartiger Erhöhung weitestgehend ausgeschlossen werden, da zwischen dem unflexiblen Schaltklappengrundkörper und der wulstartigen Erhöhung ein Freiraum vorhanden ist.

Vorteilhafterweise ist die Schaltklappenvorrichtung bestehend aus dem Schaltklappengrundkörper, der Welle und den Flügelelementen einstückig herstellbar, wodurch auf eine Montage der Einzelteile verzichtet werden kann, so daß die Schaltklappenvorrichtung preisgünstig zum Beispiel aus Kunststoff hergestellt werden kann.

Die Flügelelemente sind vorzugsweise derart an dem Schaltklappengrundkörper angeordnet, daß sie beim Übergang vom geöffneten zum geschlossenen Zustand entgegengesetzt zur Drehrichtung weisen und im wesentlichen teilkreisbogenförmig ausgeführt sind und zwar derart, daß die Flügelelemente mit wachsendem Abstand vom Schaltklappengrundkörper zur inneren Wand des Luftansaugkanalsystems weisen. Dadurch wird erreicht, daß sie sich bei geschlossener Schaltklappe an beiden Seiten der Schaltklappe um die wulstartige Erhöhung an der inneren Wand des Kanals legen, wodurch die Dichtigkeit zusätzlich sichergestellt wird.

In einer bevorzugten Ausführungsform ist ein Radius der im wesentlichen teilkreisbogenförmigen Flügelelemente kleiner als ein Radius der korrespondierenden wulstartigen Erhöhung der inneren Wand des Luftansaugkanalsystems. Hierdurch können sowohl bestehende Fertigungstoleranzen der Schaltklappe ausgeglichen werden, so daß diese aufgrund der geringeren Anforderungen preiswerter hergestellt werden kann, als auch ein mögliches Verklemmen der Schaltklappe durch den entstehenden Freiraum zwischen Flügel und wulstartiger Erhöhung weitestgehend ausgeschlossen werden, da zwischen dem unflexiblen Schaltklappengrundkörper und der wulstartigen Erhöhung ein Freiraum vorhanden ist.

Vorteilhafterweise ist die Schaltklappenvorrichtung bestehend aus dem Schaltklappengrundkörper, der Welle und den Flügelelementen einstückig herstellbar, wodurch auf eine Montage der Einzelteile verzichtet werden kann, so daß die Schaltklappenvorrichtung preisgünstig zum Beispiel aus Kunststoff hergestellt werden kann.

Die Schaltklappenvorrichtung bestehend aus dem Schaltklappengrundkörper, der Welle und den Flügelelementen ist auch in 2-Komponenten-Spritzgießtechnik herstellbar, so daß für die Flügel beispielsweise ein flexibleres Material zur besseren Anpassung an die wulstartige Erhöhung beziehungsweise an entstehende Ablagerungen gewählt werden kann, ohne einen zusätzlichen Herstellungs- beziehungsweise Montageschritt zu benötigen.

In einer bevorzugten Ausführungsform der Schaltklappenvorrichtung sind mehrere Schaltklappen auf einer gemeinsamen Welle angeordnet sind, wodurch die Anzahl der Bauteile und somit die entstehenden Kosten reduziert werden.

In einer vorteilhaften Ausgestaltung der Schaltklappenvorrichtung sind die Flügelelemente der im wesentlichen rechteckigen Schaltklappe nur an den vertikal zur Achsrichtung der Welle gelegenen Seiten der Schaltklappe angeordnet, so daß die Stabilität erhalten bleibt aber gleichzeitig die Strömung bei geöffneter Schaltklappe nicht durch Flügelelemente, die senkrecht zur Kanaldurchströmungsrichtung angeordnet sind, gestört wird

In einer bevorzugten Ausführungsform der Schaltklappenvorrichtung ist der Schaltklappengrundkörper teilkreisbogenförmig ausgebildet und zwar derart, daß ein Radienmittelpunkt des Teilkreisbogens im Bereich einer Mittelachse eines Ansaugkanals angeordnet ist, so daß eine im wesentlichen glatte innere Wand des durch die Schaltklappe verschlossenen Ansaugkanals entsteht, so daß der Ansaugkanal im wesentlichen störungsfrei durchströmbar ist.

Durch die beschriebenen Ausführungsformen wird eine Schaltklappenvorrichtung geschaffen, die preisgünstig herzustellen und zu montieren ist, gute Durchströmungseigenschaften im geöffneten Zustand und eine gute Abdichtung im geschlossenen Zustand schafft, wobei ein mögliches Verklemmen weitestgehend verhindert wird.

Ein Ausführungsbeispiel ist in den Figuren am Beispiel einer Schaltklappenvorrichtung dargestellt und wird nachfolgend beschrieben.
Figur 1 zeigt in Draufsicht eine erfindungsgemäße Schaltklappenvorrichtung mit mehreren Schaltklappen auf einer gemeinsamen Welle.
Figur 2 zeigt eine Seitenansicht eines Schaltklappengrundkörpers einer Schaltklappe mit Flügelelementen
Figur 3 zeigt eine Schnittebene einer geschlossenen Schaltklappe in einem Kanal mit wulstartiger Erhöhung

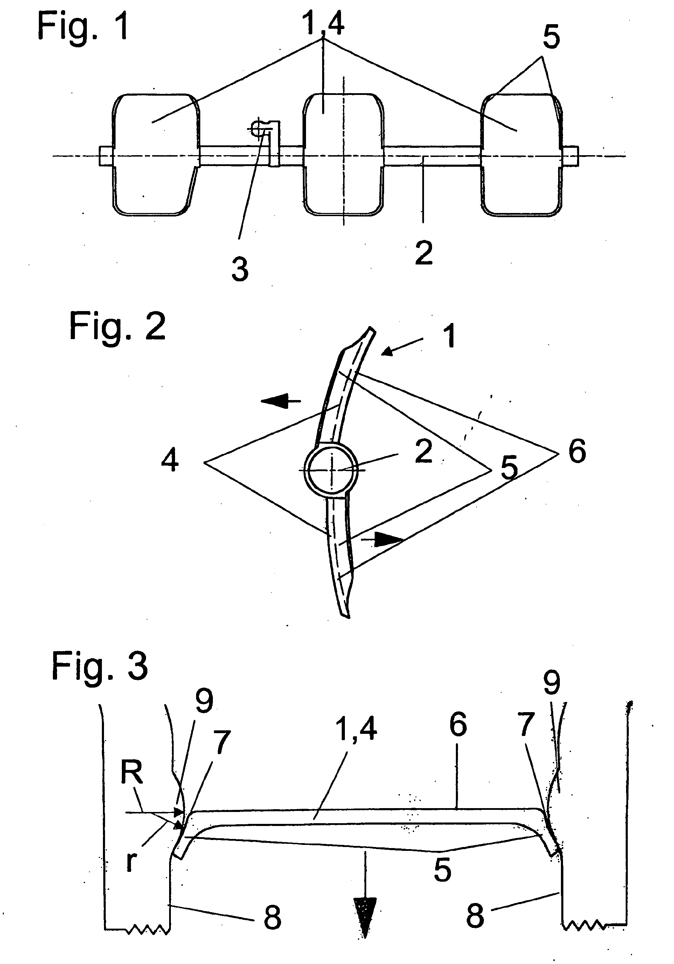

In Figur 1 ist eine einstückig hergestellte Schaltklappenvorrichtung dargestellt, die aus drei Schaltklappen 1, die auf einer gemeinsamen Welle 2, die in einem nicht dargestellten Luftansaugkanalsystem gelagert wird, angeordnet sind sowie einem Koppelelement 3 zur Drehung der Schaltklappenwelle 2 über eine nicht dargestellte Verstelleinrichtung besteht. Die Schaltklappen 1 bestehen aus einem Schaltklappengrundkörper 4 und Flügelelementen 5. Diese Flügelelemente 5 sind am äußeren Randbereich des Schaltklappengrundkörpers 4 angeordnet.

Aus Fig. 2 wird ersichtlich, daß die Flügelelemente 5 beim Übergang vom dargestellten geschlossenen zum geöffneten Zustand der Schaltklappe 1 also bei Drehung in Pfeilrichtung in Drehrichtung weisen und lediglich an den vertikal zur Achsrichtung der Welle 2 gelegenen äußeren Seiten der Schaltklappe 1 angeordnet sind. Die Form des Schaltklappengrundkörpers 4 ist so gewählt, daß seine zu einem Saugkanal weisende Oberfläche 6 teilkreisbogenförmig ausgebildet ist, so daß eine innere Wand des durch die Schaltklappe 1 verschließbaren Saugkanals im wesentlichen eine glatte Oberfläche aufweist, also verlängert wird und störungsfrei durchströmt werden kann.

Die Form der Flügelelemente 5 wird aus Fig. 3 deutlich. Die Flügelelemente 5 und vor allem ihre äußeren Flächen 7 sind im wesentlichen teilkreisbogenförmig ausgeführt. Sie weisen mit wachsendem Abstand vom Schaltklappengrundkörper 4 nach außen zu einer inneren Kanalwand 8 des Luftansaugkanalsystems. Dort liegen sie im hier dargestellten geschlossenen Zustand der Schaltklappe 1 an einer wulstartigen Erhöhung 9 an der inneren Kanalwand 8 an. Es ist zu erkennen, daß ein Radius r dieser teilkreisbogenförmigen äußeren Fläche 7 der Flügelelemente 5 kleiner ist als ein Radius R der korrespondierenden wulstartigen Erhöhung 9 an der inneren Wand 8 des Luftansaugkanalsystems. Zum Öffnen der Schaltklappe 1 wird diese in der dargestellten Schnittebene in Pfeilrichtung bewegt.

Wird nun die Schaltklappenvorrichtung vom geöffneten Zustand, in dem der aufgrund der vorhandenen Flügelelemente 5 dünn ausführbare Schaltklappengrundkörper 4 der Luftströmung nur einen geringen Strömungswiderstand bietet, in Schließrichtung über die Verstelleinrichtung gedreht, wird der Schaltklappengrundkörper 4 an der wulstartigen Erhöhung 9 des Kanals vorbeigeführt bis die Flügelelemente 5 den Bereich der Erhöhung 9 erreichen und sich dort dichtend anlegen. Dazu können die Flügelelemente 5 auch in 2-Komponenten Spritzgußverfahren hergestellt werden, so daß sie eine höhere Elastizität aufweisen können als der Grundkörper 4 und sich somit über eine größere Dichtfläche an die Erhöhung 9 anlegen und sich vorhandenen Unebenheiten besser anpassen können. Durch diese Flexibilität der Flügel können auch Toleranzen in den äußeren Abmessungen des Schaltklappengrundkörpers 4 ausgeglichen werden, ohne die Funktionalität negativ zu beeinflussen.

Mit der beschriebenen Ausführungsform der Erfindung liegt eine Konstruktion vor, die die Vorteile einer preisgünstigen Herstellung und Montage mit einer weitestgehend störungsfreien Strömung der Luft im Ansaugkanal im geöffneten Zustand der Schaltklappe und einem dichten Verschluß des Kanals bei geschlossener Schaltklappe gewährleistet und ein Verklemmen verhindert.

Veränderungen beispielsweise bezüglich des Einsatzortes der beanspruchten Schaltklappenvorrichtung, der gewählten Werkstoffe oder der Ausformung der Flügel bzw. der Erhöhung sind denkbar, ohne den Schutzbereich der Patentansprüche zu verlassen.

## Patentansprüche

1. Luftansaugkanalsystem einer Verbrennungskraftmaschine mit einer Schaltklappenvorrichtung, welche mindestens einen Schaltklappengrundkörper aufweist, welcher drehfest auf einer Welle angeordnet ist, die in einem Gehäuse des Luftansaugkanalsystems drehbar gelagert ist und über eine Verstellvorrichtung in Drehung versetzbar ist, **dadurch gekennzeichnet, daß** am äußeren Randbereich des Schaltklappengrundkörpers (4) Flügelelemente (5), die im geschlossenen Zustand der Schaltklappe (1) an einer wulstartigen Erhöhung (9) einer inneren Wand (8) des Luftansaugkanalsystems anliegen, derart an dem Schaltklappengrundkörper (4) angeordnet sind, dass sie beim Übergang vom geöffneten zum geschlossenen Zustand entgegengesetzt zur Drehrichtung weisen.

2. Luftansaugkanalsystem einer Verbrennungskraftmaschine nach Anspruch 1, **dadurch gekennzeichnet, daß** die Flügelelemente (5) im wesentlichen teilkreisbogenförmig ausgeführt sind und zwar derart, daß die Flügelelemente (5) mit wachsendem Abstand vom Schaltklappengrundkörper (4) nach außen zur inneren Wand (8) des Luftansaugkanalsystems weisen.

3. Luftansaugkanalsystem einer Verbrennungskraftmaschine nach Anspruch 1 oder 2, **dadurch gekennzeichnet, daß** ein Radius (r) der im wesentlichen teilkreisbogenförmigen Flügelelemente (5) kleiner ist als ein korrespondierender Radius (R) der wulstartigen Erhöhung (9) der inneren Wand (8) des Luftansaugkanalsystems.

4. Luftansaugkanalsystem einer Verbrennungskraftmaschine nach einem der vorhergehenden Ansprüche, **dadurch gekennzeichnet, daß** die Schaltklappenvorrichtung bestehend aus dem Schaltklappengrundkörper (4), der Welle (2) und den Flügelelementen (5) einstückig herstellbar ist.

5. Luftansaugkanalsystem einer Verbrennungskraftmaschine nach Anspruch 4, **dadurch gekennzeichnet, daß** die Schaltklappenvorrichtung bestehend aus dem Schaltklappengrundkörper (4), der Welle (2) und den Flügelelementen (5) in 2-Komponenten-Spritzgießtechnik herstellbar ist.

6. Luftansaugkanalsystem einer Verbrennungskraftmaschine nach einem der vorhergehenden Ansprüche, **dadurch gekennzeichnet, daß** mehrere Schaltklappen (1) auf einer gemeinsamen Welle (2) angeordnet sind.

7. Luftansaugkanalsystem einer Verbrennungskraftmaschine nach einem der vorhergehenden Ansprüche, **dadurch gekennzeichnet, daß** die Flügelelemente (5) an den vertikal zur Achsrichtung der Welle (2) gelegenen Seiten der Schaltklappe (1) angeordnet sind.

8. Luftansaugkanalsystem einer Verbrennungskraftmaschine nach einem der vorhergehenden Ansprüche, **dadurch gekennzeichnet, daß** eine Oberfläche (6) des Schaltklappengrundkörpers (4) teilkreisbogenförmig ausgebildet ist und zwar derart, daß ein Radienmittelpunkt des Teilkreisbogens im Bereich einer Mittelachse eines Ansaugkanals angeordnet ist, so daß eine im wesentlichen glatte innere Wand des durch die Schaltklappe (1) verschlossenen Ansaugkanals entsteht.

## Claims

1. Air-intake conduit system of an internal combustion engine comprising a switching flap device having at least one basic switching flap body arranged on a shaft in a manner secured against rotation, said shaft being rotatably supported in a housing of the air-intake conduit system and being rotatable by means of an adjusting device, **characterized in that**, at the outer edge portion of the basic switching flap body (4), wing elements (5), which in the closed state of the switching flap (1) abut against a bead-like raised part (9) of an inner wall (8) of the air-intake conduit system, are arranged on the basic switching flap body (4) such that they are oriented opposite to the direction of rotation during the transition from the opened to the closed state.

2. Air-intake conduit system of an internal combustion engine as defined in claim 1, **characterized in that** the wing elements (5) are substantially shaped as part circular arcs, such that, as the distance from the basic switching flap body (4) increases in the outward direction, the wing elements (5) point to the inner wall (8) of the air-intake conduit system.

3. Air-intake conduit system of an internal combustion engine as defined in claim 1 or 2, **characterized in that** a radius (r) of the substantially part circle arc-shaped wing elements (5) is smaller than a corresponding radius (R) of the bead-like raised part (9) of the inner wall (8) of the air-intake conduit system.

4. Air-intake conduit system of an internal combustion engine as defined in any one of the preceding claims, **characterized in that** the switching flap device, formed by the basic switching flap body (4), the shaft (2) and the wing elements (5), can be manufactured integrally.

5. Air-intake conduit system of an internal combustion engine as defined in claim 4, **characterized in that** switching flap device, formed by the basic switching flap body (4), the shaft (2) and the wing elements (5), can be manufactured with a two-component injection molding technique.

6. Air-intake conduit system of an internal combustion engine as defined in any one of the preceding claims, **characterized in that** a plurality of switching flaps (1) is arranged on a common shaft (2).

7. Air-intake conduit system of an internal combustion engine as defined in any one of the preceding claims, **characterized in that** the wing elements (5) are arranged on the sides of the switching flap (1) that are situated vertically with respect to the axial direction of the shaft (2).

8. Air-intake conduit system of an internal combustion engine as defined in any one of the preceding claims, **characterized in that** a surface (5) of the basic switching flap body (4) is formed in the shape of a part circle arc such that a centre of radii of the part circle arc is arranged in the area of a centre line of an intake conduit so that a substantially smooth inner wall of the intake conduit closed by the switching valve (1) is formed.

## Revendications

1. Système de conduit d'aspiration d'air d'un moteur à combustion interne avec un dispositif de volet de commande comprenant au moins un corps de base du volet de commande agencé sur un arbre de manière résistante à la torsion, ledit arbre étant supporté de manière rotative dans un boîtier du système de conduit d'aspiration d'air et étant apte à être mis en rotation par un moyen de réglage, **caractérisé en ce que** des ailettes (5), qui, dans l'état fermé du volet de commande (1), portent sur une bosse en forme de bourrelet (9) d'une paroi interne (8) du système de conduit d'aspiration d'air, sont agencées dans la région extérieure du corps de base du volet de commande (4) de manière que, pendant la transition de l'état ouvert vers l'état fermé, elles montrent dans la direction opposée au sens de rotation.

2. Système de conduit d'aspiration d'air d'un moteur à combustion interne selon la revendication 1, **caractérisé en ce que** les ailettes (5) sont formées sensiblement en forme d'un arc de cercle de manière que les ailettes (5) sont dirigées vers la paroi interne (8) du système de conduit d'aspiration d'air au fur et mesure de la croissance de la distance du corps de base du volet de commande (4).

3. Système de conduit d'aspiration d'air d'un moteur à combustion interne selon la revendication 1 ou 2, **caractérisé en ce qu'** un rayon (r) des ailettes (5) sensiblement en forme d'un arc de cercle est plus petit qu'un rayon (R) correspondant de la bosse en forme de bourrelet (9) de la paroi interne (8) du système de conduit d'aspiration d'air.

4. Système de conduit d'aspiration d'air d'un moteur à combustion interne selon une quelconque des revendication précédentes, **caractérisé en ce que** le dispositif de volet de commande, qui est formé par le corps de base du volet de commande (4), l'arbre (2) et les ailettes (5), peut être formé d'une seule pièce.

5. Système de conduit d'aspiration d'air d'un moteur à combustion interne selon la revendication 4, **caractérisé en ce que** le dispositif de volet de commande, qui est formé par le corps de base du volet de commande (4), l'arbre (2) et les ailettes (5), peut être formé par une technique de moulage par injection à deux composantes.

6. Système de conduit d'aspiration d'air d'un moteur à combustion interne selon une quelconque des revendications précédentes, **caractérisé en ce que** plusieurs volets de commande (1) sont agencés sur un arbre (2) commun.

7. Système de conduit d'aspiration d'air d'un moteur à combustion interne selon une quelconque des revendications précédentes, **caractérisé en ce que** les ailettes (5) sont agencées sur les côtés orientés verticalement à la direction axiale de l'arbre (2).

8. Système de conduit d'aspiration d'air d'un moteur à combustion interne selon une quelconque des revendications précédentes, **caractérisé en ce qu'**une surface (6) du corps de base du volet de commande (4) est formée en arc de cercle de manière que le centre du rayon de l'arc de cercle est agencé dans la région de l'axe central d'un conduit d'aspiration, alors qu'un paroli interne sensiblement lisse du conduit d'aspiration fermé par le volet de command est formé.
